# EUROPEAN PATENT APPLICATION

(11) **EP 4 067 423 A1**
(43) Date of publication of application: **05.10.2022**
(21) Application number: 21166048.5
(22) Date of filing: 30.03.2021
(51) Int. Cl.: C08J 11/16, C08J 11/08

(54) **PROCESS FOR CONVERTING A WASTE MATERIAL COMPRISING A CELLULOSE AND AN ORGANIC NON-CELLULOSIC MATERIAL**

(71) Applicant: Yerrawa B.V., 3871 KM Hoevelaken (NL)
(72) Inventor: O'CONNOR, Paul, 3871 KM HOEVELAKEN (NL)
(74) Representative: Hoyng Rokh Monegier B.V.

(57) **Abstract**

The invention relates to a process for converting a waste material comprising a cellulose containing part and optionally a non-cellulosic part, for example plastic, to useful products said process comprising contacting the waste material with a first molten salt solvent at a first low temperature to dissolve the cellulose, separating non-dissolved components from the cellulose solution, precipitating and separating the cellulose from the used first molten salt solution and carbonising non-dissolved components at high temperature in a second molten salt solvent comprising the used first molten salt solvent to form solid carbon and hydrogen.

## Description

### BACKGROUND OF THE INVENTION

### 1. Field of the Invention

This invention relates to a process for converting a waste material to useful products wherein the waste material comprises cellulose and optional non-cellulosic material, in particular plastic.

### 2. Description of the Related Art

Waste materials are often diverse and complex mixtures that are difficult to recycle or convert to useful products. Because of the complexity and diversity of the waste materials and the price of recycling, at present waste materials are for the largest part disposed in landfills or incinerated resulting in the pollution of the land and pollution of the air with greenhouse gasses in the form of for instance CO₂ and CH₄ and other non-desired pollutants as for instance NOₓ, SOₓ, NH₄ and chlorinated compounds.

In view of the environmental problems and climate change, currently many processes are being developed to convert waste material into value-added products avoiding the detrimental environmental effects caused by air, land and water pollution. The big challenge in this development is not only dealing with the complexity of the different components in the waste material, but also in providing a process that is able to handle diverse different types of waste materials in a relatively simple way resulting in value added products and with an attractive process economy.

WO2020/252523 describes a process for separation and recycling of blended polyester and cotton textiles (or other regenerated cellulosic fibre textile fabric) wherein the textiles are shredded and mixed with an aqueous solution of sulfuric acid and water, before being heated and pressurised in a sealed reactor, resulting in a liquid comprising cellulose particles and polyester fibre. The output is dewatered, with free liquid filtered to recover any cellulose particles present therein. The dewatered fibre mix is washed with a liquid wash before being dewatered and again free liquid being filtered to recover any cellulose particles. The recovered cellulose particles and the polyester fibres present in the washed dewatered fibre mix are output for re-use. This process has several disadvantages. One disadvantage is that it can be applied only to a precisely defined waste material of polyester and cotton textiles. The process also produces waste streams (acid and washing solutions) that pose an environmental hazard, the cellulose is degraded for a large part resulting in lower added value products and the polyester fibers often have too low quality compared to freshly prepared polyester fibers that they cannot be re-used.

The above described problem that the separated products have too low quality to be re-used is addressed in processes that chemically convert waste materials to useful products at high temperatures and pressures, for example fast pyrolysis, catalytic pyrolysis, gasification plus Fisher Tropps and hydrothermal liquefaction. These processes in general aim to convert the waste materials to biofuels, waxes, carbon and hydrogen.

In WO2010053989 O'Connor describes the thermal catalytic cracking of solid biomass using an intimate mixture or composite of the solid particulate biomass material and a particulate catalytic material such as mixed metal oxides, layered cationic materials, and hydrotalcite-like materials.

Cao e.a. describe in Waste Management 100 (2019) 138-150, Hydrothermal carbonization of biogas digestate. Digestate is a residue from the biogas production by anaerobic digestion of biomass and comprises mixture of undigested biomass and microbes. The digestate is an organic waste product and is usually applied to farmlands as fertilizer. However, the presence of heavy metals, pathogens, indicator organisms, and high loads of nitrogen in the digestate limit its land application. The biomass can be crop waste, manure, organic household waste. Cao describes hydrothermal carbonization (HTC) to convert low-value wet biomass to a solid product termed hydrochar by hydrothermal carbonizing a 15 wt% dry organic matter weight in water in an autoclave at temperatures ranging between 170 and 250 °C.

Heidi S. Nygard and Espen Olsen, describe in a review article in the International Journal of Low-Carbon Technologies 2012, 7, 318-324 a Review of thermal processing of biomass and waste in molten salts for production of renewable fuels and chemicals. Thermal conversion in molten salts is fairly recent development. The use of molten salts is described for the pyrolytic conversion of cellulose in eutectic mixture of lithium, potassium and sodium carbonates at temperatures ranging from 851 to 962°C.

Boyi Zhang e.a. describe in J. Mater. Chem. A, 2019, 7, 22912 Molten salts promoting the "controlled carbonization" of waste polyesters into hierarchically porous carbon for high-performance solar steam evaporation. Herein, hierarchically porous carbon (HPC) having an irregular, inter-connected nanoparticle morphology is synthesized through "controlled carbonization" of low-cost waste poly(ethylene terephthalate) (PET) using ZnCl₂/NaCl eutectic salts at 550°C. The HPC is used to harvest solar energy for diverse applications such as distillation, desalination, and production of freshwater.

In WO2018141911 O'Connor describes a carbonization process for converting a hydrocarbon feed, for example oils or carbohydrates, are converted into hydrogen and a carbon phase, said process comprising the steps of contacting hydrocarbons with a molten salt at high temperature wherein the hydrocarbons are cracked to produce hydrogen and a solid or liquid carbon phase which are separated from the molten salt. The hydrogen is used to react with CO₂ sequestered from air to produce hydrocarbons and to reduce greenhouse gas CO₂ in the atmosphere.

However, the known processes have several disadvantages. An important disadvantage is that high temperature conversion of a waste material comprising a lot of oxygen atoms, like biobased waste, generates a lot of CO₂ and water at the expense of precious hydrogen. Also, these processes have difficulties to deal with heteroatoms like Sulphur, nitrogen and halogens, which consume precious hydrogen and produce toxic exhaust gasses. Apart from that, many prior art processes use very high temperatures and/or pressures which leads to high energy consumption and process complexity.

There remains a desire for a process whereby waste material can be converted to value-added products that does not have one or more of the abovementioned disadvantages; in particular a more generally applicable, cost-effective process and resulting in high value-added products that can be used to convert diverse waste materials into value added products. Given the complexity of the waste streams the process should preferably also be able to avoid detrimental effects of hetero atoms like amongst others Sulfur, Nitrogen, Oxygen and Chlorine compounds which can cause environmental pollution (SOₓ, NOₓ and Chlorine compounds) but can also diminish the yield of valuable hydrogen formed.

### BRIEF SUMMARY OF THE INVENTION

The present invention addresses these problems by providing a process for converting a waste material comprising cellulose and optional non-cellulosic material comprising the steps of
I. Contacting the waste material with a first molten salt solvent at a first temperature below 125°C, preferably below 100°C and dissoluting the cellulose,
II. Separating the obtained cellulose solution into two fractions comprising
   a) Fraction II.a) comprising a solution of cellulose in the molten salt solvent and optional dissolved non-cellulosic material,
   b) Fraction II.b) comprising non-dissolved material,
III. Adding anti-solvent to precipitate cellulose from Fraction II.a and separating into
   a) Fraction III.a) comprising precipitate cellulose,
   b) Fraction III.b) comprising used first molten salt solvent comprising the salt, the anti-solvent, cellulose degradation products and optional dissolved non-cellulosic material,
IV. Preferably evaporating anti-solvent from Fraction III.b to form a concentrated molten salt Fraction III.bc,
V. Providing a carbonization feed comprising Fraction III.b or Fraction III.bc and/or Fraction II.b) and carbonising said feed in a second molten salt solvent at a second temperature above 150°C, preferably above 200°C, more preferably above 300°C, and preferably lower than 600°C, more preferably lower than 500°C to form solid carbon and hydrogen,
VI. Separating the formed solid carbon to form
   a) Fraction VI.a) comprising solid carbon,
   b) Fraction VI.b) comprising the used second molten salt solvent.

The process of the invention presents one or more advantages compared to prior art processes of an increased yield of hydrogen, lower temperature and pressure of operation and lower energy consumption, more complete conversion of the waste material feed to useful products such as carbon and hydrogen and very low residual waste streams, high flexibility in dealing with different types of waste streams in particular also waste streams comprising plastic as described in more detail below. It is noted that the term *Plastic* herein is used for all synthetic polymer materials, including thermoplastic and thermoset polymer materials.

The oxygen content of the waste stream is greatly reduced by selectively removing the cellulose which contains a lot of oxygen which results in value creation from the obtained cellulose nanocrystals as well as a great reduction in CO₂ emission and reduction consumption of hydrogen in H₂O formation, the carbon formed in the carbonization step captures heteroatoms nitrogen and Sulphur leading to reduced emissions of NH₃ and H₂S and reduced hydrogen consumption. The cellulose removal at low temperature and the carbonization at high temperature can be done in the same molten salt solvent which reduces complexity of the process. The carbonisation temperature is low compared to prior art conversion processes, which is a great advantage in reducing energy cost of the process and in reducing complexity. Good carbonisation results were even obtained in converting biomass and plastics in 200 to 400°C range. Additionally, the heteroatoms present in the waste material for example in plastics, for example chlorine in PVC, can be captured in the molten salt solvent and removed, which again reduces toxic halogen emissions and hydrogen consumption.

### DESCRIPTION OF THE DRAWING

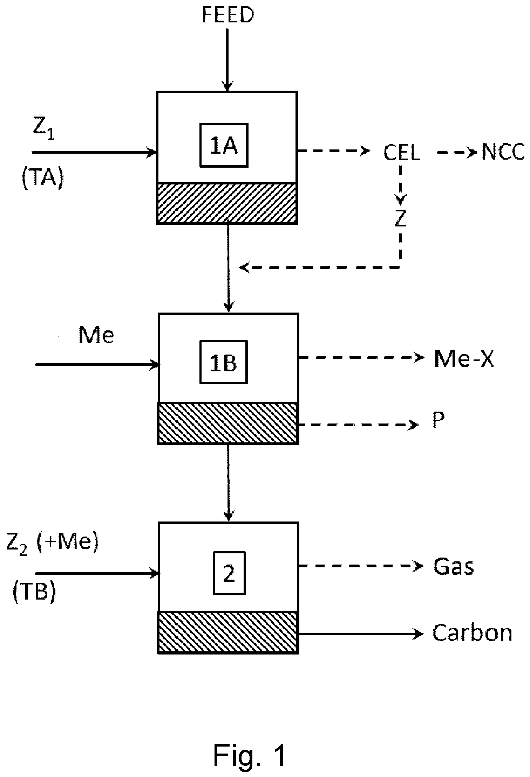

The features and advantages of the invention will be appreciated upon reference to Fig. 1 showing one embodiment of the process of the invention showing a first low temperature step 1A, wherein a feed (FEED) is contacted with a first molten salt solvent Z1 at a first temperature T_{A} forming a cellulose solution CEL which is separated from the molten salt solvent to recover Nano-structured crystalline cellulose NCC and wherein the used molten salt solvent Z is fed back into the process to (optional) step 1B wherein metal compound is added to react with heteroatom compounds X present in the molten salt solvent and wherein optional non dissolved components P and the reaction product Me-X of the metal compound and heteroatom compounds X are separated, followed by carbonisation step 2 at high temperature T_{B} in second molten salt solvent Z₂ to form gas, including hydrogen gas, and solid carbon wherein optionally further metal compound Me is added to react with heteroatom compounds X formed during carbonisation in the molten salt solvent.

### DETAILED DESCRIPTION OF THE INVENTION

The process can be applied to various different types of waste material. The waste material can be a municipal waste mix including plastics of various sorts. It can be biobased waste from farming and forestry, for example manure, residue plant material from crops like bagasse, wood etc. The waste material can be the residue of recycling processes like the mixed paper/plastic stream from paper recycling or digestate from biogas production. Waste materials can also be waste fabricated articles comprising different components such plastics comprising additives like halogen flame retardants, mixtures of cellulose and plastic material; for example, textiles made of cellulosic and plastic fibers like polycotton, polymer coated paper or cardboard material or paper reinforced plastic composite materials.

The process comprises as a first step contacting the waste material comprising cellulose and optional non-cellulosic material with a first molten salt solvent at a first temperature below 125°C, preferably below 100°C, more preferably below 90 or even below 80 °C and dissoluting the cellulose. However, several feed preparation steps may precede this step, such as sorting, removing mineral contaminants, cleaning, shredding to small parts typically between 1 and 20 mm and drying. The temperature in dissolution step I is can be chosen in wide ranges and is chosen high in view of speed of dissolution but preferably below 125°C to prevent too much carbonisation already in the first step and to prevent degradation of the cellulose which comes out of the process as a valuable product.

An advantage of the process of the invention compared to conventional processes is that the cellulose can be removed from the waste material at relatively low temperatures resulting in a low degree of hydrolization and degradation, in particular when the molten salt solvent is free of proton acid and comprises a proton scavenger. It was further found that the molten salt hydrate can be used as a solvent for carbonisation despite the fact that it is a hydrate. A big advantage of carbonisation in the molten salt hydrate is that the water vapor pressure is very low and carbonisation can be achieved at lower temperatures and much lower pressures than hydrothermal carbonisation wherein pressures typically ranges between 100 - 350 barg whereas in the process of the invention the pressure preferably is below 100 barg and preferably below 10 barg.

In this process the first molten solvent preferably is a molten metal salt, more preferably a molten metal halide salt wherein the halide preferably is bromide or chloride and wherein the metal preferably is Zn, AL or Sb. Suitable molten metal salts are chosen from the group consisting of ZnCl₂, ZnBr₂, AlCl₃, SbCl₃, their hydrates and the blends thereof. A suitable example of a blend is AlCl₃/SbCl₃. However, more preferably a molten ZnCl₂ or ZnBr₂ hydrate salt is used and most preferably ZnCl₂.4H₂O. The molten salt hydrate, preferably the preferably ZnCl₂ or ZnBr₂ hydrate, comprises 40 - 90 wt.%, preferably 50 - 85 wt.%, more preferably 65 - 85 wt.% salt, wherein wt% is relative to the total weight of salt and water.

When the waste material feed is wet it should be dried to such extent that the total water content in the waste material feed and molten salt solvent is in the above indicated ranges. One advantage of using the molten salt hydrate as the molten salt solvent is that the waste material feed does not need to be completely dried when adding the dry salt and forming the salt-hydrate in-situ with the water from the feed in contacting step I.

The first molten salt is chosen in view of recovering the cellulose from the waste stream and this can be same or different form the second molten salt solvent which is chosen in view of the carbonisation. In a highly preferred embodiment, the second molten salt solvent comprises the same molten salt as the first molten salt solvent such that the cellulose removal steps at low temperature and the carbonization steps at high temperature can be done in the same or substantially the same molten salt solvent, which reduces complexity, operational cost of the process. With substantially the same molten salt solvent is meant that the same salt is used in the first and second molten salt solvent. Differences between the first and second molten salts solvent may exist in water content and in the presence of different contaminants, but both the first and second molten salt solvent both comprise an amount of the same salt of at least 40 wt% preferably at least 50 wt% more preferably at least 60 wt%.

Process Step II comprises separating the obtained cellulose solution into two fractions comprising Fraction II.a) comprising a solution of cellulose in the molten salt solvent and optional dissolved non-cellulosic material and Fraction II.b) comprising non-dissolved material. The separating can be done by filtration, by centrifugation and/or by separation of a phase separated layer. An example of a non-cellulosic material is lignin which phase separates from the molten salt solvent when dissolving wood and can be easily separated by removing the phase separated layer. An example of dissolved non-cellulosic material is hemicellulose, which is considered not to be cellulose because it does not precipitate to crystalline cellulose and preferably is at least partially hydrolysed in the molten salt solvent to stay dissolved in solution in the molten salt solvent. Plastic waste components can be separated suitably by filtration and/or centrifugation.

Step III of the process comprises adding anti-solvent to precipitate cellulose from Fraction II.a and separating into Fraction III.a) comprising precipitate cellulose and Fraction III.b) comprising used first molten salt solvent comprising the salt, the anti-solvent, cellulose degradation products and optional dissolved non-cellulosic material. Anti-solvents for cellulose precipitation from molten salt solvents are known in the art. Suitable antisolvents, in particular for ZnCl₂ and ZnBr₂ molten salts, are C1 to C8 alcohols and ketones, in particular the alcohols of the group of straight chain and branched chain C1 to C4 alcohols, such as methanol, ethanol, propanol, and iso-propanol. Suitable ketones include the C3 to C5 ketones such as acetone and methylethylketone (MEK). Preferred organic anti-solvents agents are acetone, ethanol, t-butyl alcohol. Solid separation and washing can be performed either by centrifugation or by filtration. Organic anti-solvent could in in principle stay in fraction III.b to be carbonized in step V but is preferably evaporated in step IV.

However, most preferably water is used as anti-solvent and is preferably added in an amount to dilute the salt concentration to reduce solvent power until precipitation of cellulose. Molten salt of ZnCl₂ is preferably diluted to a concentration between 10 and 30 wt.% (relative to the total weight of salt and water), preferably between 15 and 25 wt.% and most preferably around 20 wt.%. Preferably, water is added to dilute to a concentration of at least 10, preferably at least 15 wt.% to avoid the precipitation of dissolved sugar oligomers and monomers, which beneficial for the purity of the cellulose precipitate. In the process of the invention the small sugars oligomers and monomers remain dissolved in the used first molten salt solvent Fraction III.b) and are carbonized in step V. Preferably the anti-solvent from Fraction III.b is evaporated in step IV to form a concentrated molten salt Fraction III.bc, which preferably is used in the carbonisation feed to form the second molten salt solvent.

In a particularly preferred embodiment of the process of the invention, in step I.a) the waste is first contacted with a first molten salt solvent A which is an aqueous solution comprising 40 - 65 wt% ZnCl₂ in water, whereby the amorphous cellulose phase is preferentially dissolved over the crystalline cellulose phase having an XRD type I structure, and wherein in step I.b) the obtained crystalline cellulose having an XRD type I structure is contacted with molten salt solvent B comprising between 65 and 90 wt% ZnCl₂ in water to produce delaminated cellulose having an XRD type II structure, wherein the molten salt solvent B and preferably also the molten salt solvent A are free of proton acid and preferably comprise a proton scavenger and wherein the temperature in step I.a) and I.b) is preferably below 80°C, more below 70°C, 60°C or even below 50°C. This embodiment provides valuable nano-crystalline cellulose material type II of high crystallinity, high purity and which is thermally stable (little discoloration) so it can be used in many applications.

In a particularly preferred embodiment of the invention the second molten salt solvent comprises the same salt as the first molten salt solvent and comprises in step III) precipitating the dissolved Cellulose from the first molten salt solvent by adding anti-solvent; in step IV) heating Fraction III.b and evaporating the anti-solvent from Fraction III.b to form the concentrated used molten salt solvent Fraction III.bc, and; in step V) further heating the concentrated used molten salt solvent Fraction III.bc, optionally mixed with the Fraction II.b) and optionally with additional molten salt to form the carbonization feed for carbonising in step V) and preferably further comprising a step VII comprising recycling, after optional purification, the used second molten salt solvent for use as- or for use in the first and/or second molten salt solvent. In this process it is particularly preferred that the first molten salt solvent is molten ZnCl₂-hydrate or ZnBr₂-hydrate wherein in step III) the dissolved Cellulose is precipitated from the first molten salt solvent by diluting with water, preferably in an amount to dilute to a ZnCl₂ or ZnBr₂ concentration between 10 and 30 wt.% relative to the total weight of the molten salt and water and; in step IV) evaporating the water, preferably at a temperature above 100°C, to form the concentrated molten salt Fraction III.bc.

For example, in case the waste stream comprises wood comprising cellulose, hemicellulose and lignin, the lignin forms phase separation from the first molten salt solvent which can be separated, the hemicellulose dissolves and will be at least partially hydrolysed and stays dissolved in the used first molten salt solvent. The cellulose is dissolved whereby some cellulose hydrolysis and degradation may occur but that can be kept to a minimum by choosing mild conditions as described above. The dissolved cellulose is precipitated and separated in step III to provide a useful valuable product. The cellulose degradation products and non-cellulose components like the at least partially hydrolysed hemicellulose stay dissolved in the used molten salt solvent which is also provided to the carbonisation feed to be carbonized in step V. The separated lignin fraction can be used to isolate lignin as a useful product and/or can be provided in the carbonisation feed to be carbonized in step V. In this way the residue of the wood recycling in the process of the invention is minimized and the useful product yield is optimized.

In case the waste stream comprises cellulose and as non-cellulosic material plastic material, the cellulose is first dissolved in step I and non-dissolved plastic will be separated in step II forming Fraction II.b which is then either re-used if the quality of the plastic permits and/or is mixed with used first molten salt solvent Fraction III.b or III.bc and optionally with additional second molten salt, to be carbonized in the carbonisation step V.

In step V a carbonization feed is provided comprising Fraction III.b or III.bc and/or Fraction II.b). In a most preferred embodiment, as described above, the second molten salt is substantially the same as the first molten salt and Fraction III.b or III.bc is combined with Fraction II.b) optionally with the additional fresh first molten salt if needed and heated to the carbonisation temperature.

It is also possible, though less preferred, that the second molten salt solvent in carbonisation step V is different from the first molten salt solvent. For example, the first molten salt solvent is the preferred molten Zinc-chloride or bromide hydrate salt and the second molten salt solvent is not a salt hydrate, for example a eutectic salt mixture. This is however preferably used only in exceptional cases for exceptional waste streams in addition to the above preferred process, for example when exceptionally high temperatures are required in carbonisation step V; for example higher than 500°C. In a practical situation, a waste recycling installation comprises means to switch from using a second solvent in step V that is the same or different from the first molten salt solvent and separate recycling means. In this case, the Fraction III.b or III.bc, comprising the used and contaminated first molten salt solvent, is separately carbonised in a step V and a separate carbonisation feed is prepared by mixing the separated non-dissolved Fraction II.b) with the different second molten salt solvent which is then separately carbonized in step V. The first molten salt solvent and the different second molten salt solvent are also separately purified to recover the first and second molten salt solvent.

The carbonisation feed is carbonized in the second molten salt solvent at a second temperature above 150°C, preferably above 200°C, more preferably above 300°C and preferably lower than 600°C or even lower than 500°C to form solid carbon and hydrogen. Lower temperatures are preferred in view of energy consumption and selectivity towards conversion products formed whereas higher temperatures are preferred in view of yield and speed. The optimum balance can be found by the skilled person in each case depending on waste composition and end desired products. Then, in step VI, the formed solid carbon is separated to form Fraction VI.a) comprising solid carbon and Fraction VI.b) comprising the used second molten salt solvent.

In case the carbonization feed in step V comprises heteroatoms from non-cellulosic materials in the waste material or from cellulose degradation products, at least part of the heteroatoms nitrogen and Sulphur if present are concentrated in the carbon formed in step V and removed in step VI with the solid carbon. Preferably however, also a reactant is added before carbonization step V to convert heteroatom-containing compounds to a reaction product that can be separated from the first or second molten salt solvent, wherein the reactant preferably reacts with the heteroatom compounds to form a salt that can be separated from the molten salt solvent, preferably by precipitation or by phase separation. This preferably takes place in the carbonisation step where non-cellulosic materials comprising heteroatoms degrade and generate heteroatom compounds that can react with the reactant. The reactant preferably is a metal compound, preferably a Metal, Metal Oxide or Metal hydroxide, more preferably Zinc Oxide, Magnesium Oxide, Iron Oxide or Nickel Oxide and wherein the formed heteroatom compounds comprise one or more of halogens, CO₂, SOₓ or NOₓ which react to form one or more of metal-halogenides, metal-carbonates, metal-sulfates, or metal- nitrates. So, oxygen containing compounds degrade to generate CO₂ which can be captured by metaloxides (eg Mg-oxide) to produce metal-carbonates. PVC or halogen-based flame retardants in plastics degrade in the hot molten salt to produce halogens which react for example with Zinc-oxide to produce Zinc-chloride, which is the preferred molten salt and can stay in the zinc-chloride molten salt. In case the contaminant heteroatom comprises Br or F the reactant Zinc-oxide forms reaction product is ZnBr₂ or ZnF₂ In that case the corresponding ZnBr₂ or ZnF₂ hydrate salt can be used as molten salt solvent. However, also Zinc-chloride hydrate molten salt solvent can be used as the ZnBr₂ or ZnF₂ reaction products formed do not substantially affect the solvent quality of the zinc-chloride hydrate molten salt solvent.. The ZnCl₂ may need to be diluted with water if the concentration ZnCl₂ (or ZnBr2, ZnF2) gets too high. Optionally, bromides can be removed by addition of MgO. At end of process Zn can be recovered by contacting Zn halogenide with NaOH to precipitate Zn(OH)₂. Sulphur containing compounds degrade to produce SOₓ which can be reacted with metal oxide to produce metal-sulfates or react directly to produce Metal sulfides. The skilled person can choose the reactant such that it can either stay or can be separated from the molten salt solvent used.

Preferably, a solid carbon source or a precursor thereof is added to the carbonization feed in step V) as a carbonization seed wherein preferably the amount of solid carbon source or a precursor thereof is between 0.1 and 10 wt.%, preferably between 0.1 and 5 or 3 wt.% relative to the total weight of the carbonization feed. The seed will act as a template or the deposition of the formed carbon during the carbonisation by which the quality and the yield of the formed carbon can be influenced and improved.

In view of lowering carbonisation temperatures and/or to enhance hydrogen yield, the second molten metal salt solvent in step V) may further comprise one or more dehydrogenation catalyst metals different from the metal in the molten salt, preferably chosen from the group of Ni, Fe, Cu or Zn, preferably in the form of a metal-organic complex like metal-alkyls, metal-oxides or a metal-chloride complex. It is generally preferred to keep amounts low ; preferably in an amount of less than 10, preferably less than 5 or even less than 3 mole% of the metal in the molten salt and wherein optionally the dehydrogenation catalyst metals are supported on a solid carbon source or a precursor thereof. In particular in the most preferred wherein the first and second molten solvent are zinc-chloride hydrate molten salt as described herein, a dehydrogenation catalyst is not even necessary and less preferred in view of recyclability of the molten salt solvent and use in the cellulose removal steps I - IV and is present in an amount less than 3 mole% or even less than 1 mole % of the metal in the molten salt or even 0 mole %.

The solid carbon source mentioned above as seed or as support is preferably carbon fiber, carbon nanofiber or carbon nanotube and the precursor of a carbon source preferably is lignin or cellulose. Herein, the cellulose precipitate, more preferably the highly crystalline XRD type II nano-crystalline cellulose (NCC) obtained in step III.a) as described above, can be used. In a special embodiment, the NCC carbon precursor is formed by spinning or extruding the cellulose solution Fraction II.a and precipitating in step III, for example by quenching in a water bath, to form aligned NCC spun- or extruded fibres and using these as carbon precursor seed in carbonisation step V.

In step VI the solid carbon formed is separated to form Fraction VI.a) comprising solid carbon and Fraction VI.b) comprising the used second molten salt solvent. The solid carbon is a useful product that can be valorized. The used second molten salt solvent is cooled and recycled for use in the process. Alternatively, instead of cooling, after carbonisation step V the hot carbonized feed obtained in step V is not cooled but contacted with waste material including biomass and/or plastics. The carbon in the second molten salt catalyse carbonisation as described.

The separated solid obtained in step VI.a can be further processed in a separate step at temperatures above 800°C to enhance the formation of higher quality carbon materials. The separated solid carbon can be used to prepare carbon sol fertilizer, carbon black, carbon fibers, carbon nanofibers or precursors thereof.

The invention also relates to a process for the recycling of plastic comprising heteroatoms comprising carbonizing the plastic comprising heteroatoms in a molten salt solvent at a temperature above 150°C, preferably above 200°C, more preferably above 300°C and preferably lower than 600 or 500°C, wherein a reactant is added to the molten salt solvent to convert heteroatom compounds formed during carbonization of the plastic to a compound can be separated from the molten salt solvent, wherein the molten salt solvent preferably is a molten salt solvent as described above, wherein the reactant preferably is a compound as described above, wherein the molten salt solvent preferably comprises a solid carbon source or a precursor thereof as a carbonization seed as described above, wherein the molten salt solvent preferably comprises a dehydrogenation catalyst as described above to catalyze the carbonization. Herein carbon and hydrogen atoms in the plastic are converted to solid carbon and hydrogen gas, the nitrogen and sulfur atoms in the plastic are concentrated in the formed solid carbon and other heteroatoms are captured by the reactant.

### DETAILED DESCRIPTION OF ILLUSTRATIVE EMBODIMENTS

The following is a description of certain embodiments of the invention, given by way of examples only and with reference to the drawings.

Referring to FIG. 1, a schematic view is shown of the process of the invention showing a first step 1A wherein a waste feed is mixed with in solvent Z₁ at low temperature TA and wherein cellulose product CEL is separated, an optional step 1B wherein the remaining waste stream is treated by adding metal compound Me in solvent Z₂ to react with contaminants X in the waste stream and wherein the reaction product Me-X is removed from the waste stream and optionally also remaining solid components P are removed and step 2 wherein a remaining waste stream is treated in solvent Z₃ at high temperature TB wherein residual organic components are carbonized to produce gas and carbon.

### Example A1: separating cellulose from a composite feed (Step 1A)

A composite feed comprising cellulose and a synthetic polymeric material such as PET, PVC, PP, which composite feed may originate from waste paper, cardboard, packaging, textiles or construction materials, is contacted with a Zinc Chloride molten salt solvent (Z₁) at a temperature TA of 50-90°C, whereby the cellulose part (CEL) is dissolved and separated by filtration from the synthetic polymeric part (hereafter also referred to as polymeric part).

The cellulose part (CEL) is thereafter treated to separate cellulose by precipitation from the Zinc Chloride molten salt solvent by adding an anti-solvent, preferably water. In this step Nano crystalline Cellulose NCC fibers are produced, which is a useful product in several applications as described above.

The diluted molten salt solvent is regenerated by heating and evaporating the anti-solvent, preferably water, to re-concentrate and re-use as solvent Z and to separate and re-use the anti-solvent. The molten salt solvent Z comprises organic contaminants, typically hydrocarbon or carbohydrate, typically including mono- or oligosaccharides from cellulose that is partially hydrolised in step 1A. This recycled and contaminated molten salt solvent Z is re-used as solvent in anyone of the process steps (Z₁, Z₂ or Z₃) preferably as solvent Z₂ or Z₃ step 1B and/or step 2 such that the organic contaminants are carbonized and removed in step 2 as described below.

### Example A2: Separating halogens from the polymeric part (Step 1B)

In (optional) step 1B the polymeric part from step 1A in Example A1 is treated in Zinc Chloride molten salt solvent Z₂ containing an excess of Zinc Oxide at temperatures in the range between 100 and 150°C. The Zinc-oxide reacts with halogens to form ZnCl₂ which forms part of the molten salt solvent. Bromides can be removed by addition of MgO to produce a MgBr₂ precipitate in the molten salt solvent that can be removed by filtration.

### Example A3: Carbonising the polymeric part (Step 2)

In step 2 the polymeric part from step 1A in Example A1 is carbonized in the Zinc Chloride molten salt at temperatures in the range between 300 and 500°C forming mainly Hydrogen gas and a solid Carbon. The hetero atoms like Nitrogen and Sulphur are concentrated in the Carbon.

### Example A4: Carbonising the treated polymeric part in Step 2

In step 2 the treated polymeric part from example A2 is carbonized in the Zinc Chloride molten salt at temperatures in the range of 300-500°C forming mainly Hydrogen gas and a solid Carbon. The hetero atoms like Nitrogen and Sulphur are concentrated in the Carbon.

### Example B1: Carbonising both the polymeric and the cellulose part (Step 2)

In step 2 the polymeric part from example A1 is carbonized in the Zinc Chloride molten salt at temperatures in the range of 300-500°C Nanocellulose produced in the low temperature step (A1) is separated and added to the high temperature step as a seed to enhance formation of Carbon Fiber or Carbon Fiber precursor. The Carbon product produced in this step has different properties compared to the Carbon product produced in step A3 and A4 and is suitable to produce carbon fiber.

### Example C1: separating cellulose from bio-based material

A bio-based material containing hemi-cellulose, virgin cellulose comprising amorphous- and crystalline cellulose and lignin is contacted with a Zinc Chloride hydrate molten salt solvent at a temperature of 50-90°C, whereby the non-crystalline hemi cellulose and amorphous cellulose is dissolved and separated from the crystalline cellulose and lignin.

### Example C2: Carbonising polymeric part and the cellulose/lignin part of biomass

The polymeric part from example A2 is carbonized in the Zinc Chloride molten salt at temperatures in the range of 300-500°C in the presence of the composite of crystalline cellulose and lignin as produced in Example C1.

### Example C3: Carbonising cellulose/lignin part of biomass

The separated crystalline cellulose high aspect ratio nano-fibers and lignin as produced in Example C1 is carbonized in the presence of Zinc Chloride molten salt at temperatures in the range of 300-500°C thereby producing a Carbon Fiber material.

### Example D1: separating cellulose from a polycotton feed

A composite material of cellulose and a synthetic polymer, for example a Polycotton textile material comprising cotton fibers and synthetic polymer fibers, is treated with Zinc Chloride molten salt solvent at 50-90°C and the Cellulose part is dissolved and separated from the Polyester. In this process none of the two components is damaged. The Cellulose is separated from the Zinc Chloride by precipitation and the molten salt solvent is regenerated for re-use as described in example 1A. The separated cellulose solution can also be spun to fibers into a coagulation bath wherein the cellulose precipitates to produce regenerated cellulose filaments, fibers or yarns.

### Example D2: Re-using separated polyester part

The separated Polyester fibers from Example D1 is processed to produce regenerated polyester filaments, fibers or yarns for example to be re-used in production of Poly Cotton.

### Example D3: depolymerizing the polyester part

The separated Polyester from Example D1 is depolymerized into its monomer constituents so that it can be repolymerized to produce polyester and optionally polyester fibers to produce Poly Cotton.

### Example D4: carbonising the polyester part

In step 2 the separated polyester part from step 1 in example D1 is carbonized in the Zinc Chloride molten salt at temperatures in the range between 300 and 500°C forming mainly Hydrogen gas and a solid Carbon. The hetero atoms like Nitrogen and Sulphur are concentrated in the Carbon.

### Example E1: separating cellulose from synthetic polymer coated cellulosic material

A waste stream comprising synthetic polymer coated cellulosic material, for example paper, cardboard, packaging, or a paper powder reinforced plastic composite materials (eg. MAPKA) comprise cellulose and a synthetic polymer (for example polyethylene terephthalate PET, polyethylene PE, polypropylene PP, polystyrene PS, etc). The waste stream is shredded and treated with Zinc Chloride molten salt solvent to dissolve and separate the Cellulose part as described above in example 1A without damaging either of the two components. Preferably in the shredded waste stream more than 90 wt% of the waste particles have a diameter below 1000 microns (1mm). To achieve a small size the waste material can be further milled after the shredding.

The diluted and contaminated Zinc Chloride solvent is regenerated to recycle solvent Z to be reused in the process as described above in example 1A, wherein the organic contaminants are carbonized in step 2.

### Example E2: Carbonising the synthetic polymer part

Part or all of the separated synthetic polymer waste from step 1 in example E1 is carbonized in the Zinc Chloride molten salt solvent at temperatures in the range between 300 and 500°C forming mainly Hydrogen gas and a solid Carbon. The hetero atoms like Nitrogen and Sulphur are concentrated in the Carbon.

### Example E3:

Part or all of the separated synthetic polymer waste from step 1 in example E1 is mixed with the contaminated and diluted Zinc Chloride stream and thereafter heated to above 200°C. The Zinc Chloride stream is hereby regenerated, cleaned from organic species etc. and concentrated by removing water and any non-precipitated bio-based materials and the synthetic polymer residue are both carbonized forming Carbon and Gas that precipitate and evaporate from the Zinc Chloride molten salt solvent. The Zinc Chloride molten salt solvent can then be reused in anyone of the preceding stages, preferably after cooling in the first stage.

## Claims

1. A process for converting a waste material comprising cellulose and optional non-cellulosic material comprising the steps of
I. Contacting the waste material with a first molten salt solvent at a first temperature below 125°C preferably below 100°C and dissoluting the cellulose,
II. Separating the obtained cellulose solution into two fractions comprising
a) Fraction II.a) comprising a solution of cellulose in the molten salt solvent and optional dissolved non-cellulosic material,
b) Fraction II.b) comprising non-dissolved material,
III. Adding anti-solvent to precipitate cellulose from Fraction II.a and separating into
a) Fraction III.a) comprising precipitate cellulose,
b) Fraction III.b) comprising used first molten salt solvent comprising the salt, the anti-solvent, cellulose degradation products and optional dissolved non-cellulosic material,
IV. Preferably evaporating anti-solvent from Fraction III.b to form a concentrated molten salt Fraction III.bc,
V. Providing a carbonization feed comprising Fraction III.b or Fraction III.bc and/or Fraction II.b) and carbonising said feed in a second molten salt solvent at a second temperature above 150°C, preferably above 200°C, more preferably above 300°C, and preferably lower than 600°C, more preferably lower than 500°C to form solid carbon and hydrogen,
VI. Separating the formed solid carbon to form
a) Fraction VI.a) comprising solid carbon,
b) Fraction VI.b) comprising the used second molten salt solvent.

2. The process of claim 1 wherein the first molten solvent is a molten metal salt, preferably a molten metal halide salt wherein the halide preferably is bromide or chloride and wherein the metal preferably is Zn, AL or Sb, and which is preferably chosen from the group consisting of ZnCl₂, ZnBr₂, AlCl₃, SbCl₃, their hydrates and the blends thereof, preferably a AlCl₃/SbCl₃ blend and most preferably a molten ZnCl₂ hydrate salt, preferably molten ZnCl₂.4H₂O comprising 40 - 90 wt.%, preferably 65 - 85 wt.% ZnCl₂ and wherein the second molten salt solvent preferably comprises the same molten salt as the first molten salt solvent.

3. The process of claim 1 or 2 wherein the second molten salt solvent comprises the same salt as the first molten salt solvent wherein
- in step III) precipitating the dissolved Cellulose from the first molten salt solvent by adding anti-solvent,
- in step IV) heating Fraction III.b and evaporating the anti-solvent from Fraction III.b to form the concentrated used molten salt solvent Fraction III.bc, and
- in step V) further heating the concentrated used molten salt solvent Fraction III.bc, optionally mixed with the Fraction II.b), optionally with additional fresh molten salt to form the carbonization feed for carbonising in step V) and
- optionally further comprising a step VII comprising recycling, after optional purification, the used second molten salt solvent for use as- or for use in the first or second molten salt solvent.

4. The process of claim 3 wherein the first molten salt solvent is molten ZnCl₂-hydrate or ZnBr₂-hydrate wherein
- in step III) the dissolved Cellulose is precipitated from the first molten salt solvent by diluting with water, preferably in an amount to dilute to a ZnCl₂ or ZnBr₂ concentration between 10 and 30 wt.% relative to the total weight of the molten salt and water and
- in step IV) evaporating the water, preferably at a temperature above 100°C, to form the concentrated molten salt Fraction III.bc.

5. The process of anyone of the preceding claims wherein in step I.a) the waste is first contacted with a first molten salt solvent A which is an aqueous solution comprising 40 - 65 wt% ZnCl₂ in water, whereby the amorphous cellulose phase is preferentially dissolved over the crystalline cellulose phase having an XRD type I structure, and wherein in step I.b) the obtained crystalline cellulose having an XRD type I structure is contacted with molten salt solvent B comprising between 65 and 90 wt% ZnCl₂ in water to produce delaminated cellulose having an XRD type II structure, wherein the molten salt solvent B and preferably also the molten salt solvent A are free of proton acid and preferably comprise a proton scavenger and wherein the temperature in step I.a) and I.b) is preferably below 80°C, more below 70°C, 60°C or even below 50°C.

6. The process of anyone of the preceding claims wherein the carbonization feed in step V comprises heteroatoms from non-cellulosic material in the waste material feed or from cellulose degradation products, wherein at least part of the heteroatoms nitrogen and Sulphur if present are concentrated in the carbon formed in step V and removed in step VI and wherein preferably also a reactant is added before carbonization step V to convert heteroatom-containing compounds to a reaction product that can be separated from the first or second molten salt solvent or both, wherein the reactant preferably reacts with the heteroatom compounds to form a salt that can be separated from the molten salt solvent, preferably by precipitation or by phase separation.

7. The process of claim 6 wherein the reactant is a metal compound, preferably a Metal, Metal Oxide or Metal hydroxide, more preferably Zinc Oxide, Magnesium Oxide, Iron Oxide or Nickel Oxide and wherein the formed heteroatom compounds comprise one or more of halogens, CO₂, SOₓ or NOₓ which react to form one or more of metal-halogenides, metal-carbonates, metal-sulfates, or metal- nitrates.

8. The process according to anyone of the preceding claims, wherein a solid carbon source or a precursor thereof is added to the carbonization feed in step V) as a carbonization seed wherein preferably the amount of solid carbon source or a precursor thereof is between 0.1 and 10 wt.%, preferably between 0.1 and 5 or 3 wt.% relative to the total weight of the carbonization feed.

9. The process according to anyone of the preceding claims, wherein the second molten metal salt solvent in step V) further comprises one or more dehydrogenation catalyst metals different from the metal in the molten salt, preferably chosen from the group of Ni, Fe, Cu or Zn, to enhance hydrogen yield in the process, preferably in the form of a metal-organic complex like metal-alkyls, metal-oxides or a metal-chloride complex and preferably in an amount of less than 10, preferably less than 5 or even less than 3 mole% of the metal in the molten salt and wherein optionally the dehydrogenation catalyst metals are supported on a solid carbon source or a precursor thereof.

10. The process according to claims 8 or 9, wherein the solid carbon source is carbon fiber, carbon nanofiber or carbon nanotube and wherein the precursor of a carbon source is lignin or cellulose, preferably the cellulose precipitate obtained in step III.a) of claim 1 and more preferably nano-crystalline cellulose obtained in claim 5, optionally in the form of spun or extruded nano-crystalline cellulose fibers.

11. The process according to any of the preceding claims, wherein the separated solid obtained in step VI.a is further processed in a separate step at temperatures above 800°C to enhance the formation of higher quality carbon materials.

12. The process according to any of the preceding claims, further comprising one or more process steps wherein the separated solid carbon is used to prepare carbon sol fertilizer, carbon black, carbon fibers, carbon nanofibers or precursors thereof.

13. The process according to any of the preceding claims, wherein the waste material feed comprises a biobased waste stream, preferably comprising wood, crop residues, manure, digestate or organic household waste, wherein the waste material feed is preferably dried before step I.

14. The process according to any of the preceding claims, wherein the waste material feed comprises cellulose and a plastic material, preferably comprising one or more waste materials from the list consisting of municipal plastic waste, plastic contaminated paper, polymer coated paper or cardboard, a composite material comprising paper reinforced plastic, a multilayer laminate of paper and polymer, a textile comprising fibers comprising cellulose and plastic fibers wherein plastic material is separated in step II.b forming Fraction II.b) which is separated for re-use or is provided as part of the carbonization feed which is carbonized in step V.

15. A process for the recycling of plastic comprising heteroatoms comprising carbonizing the plastic comprising heteroatoms in a molten salt solvent at a temperature above 150°C, preferably above 200°C, more preferably above 300°C, even more preferably above 400°C and preferably lower than 800, 700 or 600°C,
- wherein carbon and hydrogen atoms in the plastic are converted to solid carbon and hydrogen gas, wherein nitrogen and sulfur atoms in the plastic are concentrated in the formed solid carbon and wherein preferably a reactant is added to the molten salt solvent to convert heteroatom compounds formed during carbonization of the plastic to a compound that is separated from the molten salt solvent,
a. wherein the molten salt solvent preferably is a molten salt solvent as described in anyone of claims 3 - 5,
b. wherein the reactant preferably is a compound as described in claims 6 or 7,
c. wherein the molten salt solvent preferably comprises a solid carbon source or a precursor thereof as a carbonization seed as described in claim 8 or 10,
d. wherein the molten salt solvent preferably comprises a dehydrogenation catalyst as described in claim 9 or 10 to catalyze the carbonization,
wherein preferably the molten salt solvent comprising a carbon source is the carbonized feed obtained in step V according to anyone of claims 1 - 14.
